# EUROPÄISCHE PATENTSCHRIFT

(11) **EP 1 744 935 B1**
(45) Veröffentlichungstag und Bekanntmachung des Hinweises auf die Patenterteilung: **05.10.2011**
(21) Anmeldenummer: 05715017.9
(22) Anmeldetag: 24.02.2005
(51) Int. Cl.: B60R 19/18

(54) **ANBINDUNG EINER CRASHBOX AN DEN QUERTRÄGER**
FASTENING OF A CRASH BOX TO A CROSS MEMBER
MONTAGE D'UN BOITIER AMORTISSEUR DE CHOCS SUR UNE TRAVERSE

(30) Priorität: 19.03.2004 DE 102004014047
(43) Veröffentlichungstag der Anmeldung: 24.01.2007
(73) Patentinhaber: Benteler Automobiltechnik GmbH, 33102 Paderborn (DE)
(72) Erfinder: ARNS, Wilhelm, 33102 Paderborn (DE)
(86) Internationale Anmeldenummer: PCT/DE2005/000311
(87) Internationale Veröffentlichungsnummer: WO 2005/092669

(56) Entgegenhaltungen:
- DE-A1- 10 057 311
- US-A- 5 100 189
- US-A- 5 803 514
- US-A1- 2002 047 281
- PATENT ABSTRACTS OF JAPAN Bd. 017, Nr. 565 (M-1495), 13. Oktober 1993 (1993-10-13) -& JP 05 162594 A (SUZUKI MOTOR CORP), 29. Juni 1993 (1993-06-29)

## Beschreibung

Die Erfindung betrifft ein Stossfängersystem, bestehend aus einem Querträger mit einem hutförmigen Profil mit einem Mittelsteg und zwei davon abgehenden Schenkeln mit je einem Flansch und zwei zwischen Querträger und den Längsträgern festgelegten Crashboxen nach dem Oberbegriff des Anspruchs 1.

Stossfängersysteme sind an Front und Heck eines Kraftfahrzeugs zwischen der die Karosserie abschließenden Kunststoffverschalung und dem Rahmen des Kraftfahrzeugs angeordnet und bestehen in der Regel aus einem Querträger, der über je ein Deformationselement an den beiden Längsträgern des Fahrzeugs befestigt ist, wobei in erster Linie die Deformationselemente kinetische Aufprallenergie absorbieren, indem sie sie in Verformungsarbeit umwandeln. Das Stossfängersystem trägt somit dazu bei, dass die Fahrzeugstruktur bei einem Aufprall mit geringer Geschwindigkeit keine Beschädigung davonträgt. Neben den heutigen Gesetzesanforderungen im Bereich der Barrieren- und Wandauffahrten des Low-Speed-Tests (bis 16 km/h) sind jedoch auch die Bauraumgegebenheiten zu beachten, denn häufig steht bei einer herkömmlichen Bauweise nicht ausreichend oder nur ein bestimmter Platz für den Querträger oder genug Deformationsweg für die Deformationselemente zur Verfügung. Auch allein aus dem Design eines Stoßfängersystems können sich bestimmte Gestaltungsanforderungen ergeben, so müssen beispielsweise Höhenunterschiede zwischen den Längsträgern und dem Querträger überwunden werden. Dies hat Auswirkung auf die Anbindung der Crashbox an den Querträger. An den Längsträger sollte die Crashbox immer möglichst mittig angebunden werden, damit eine möglichst geringe Momenteneinleitung in den Längsträger gewährleistet ist.

Ein in der Praxis bewährtes Stoßfängersystem besteht aus einem Querträger mit einem offenen, hutförmigen Profil mit einem Mittelsteg, zwei davon abgehenden Schenkeln und je einem Flansch, wobei der Querträger mit einer Crashbox aus einer im Querschnitt rechteckigen Konstruktion, gebildet aus einer Ober- und einer Unterschale, verbunden ist. Die Halbschalen der Crashbox sind U-förmig profiliert und miteinander gefügt. Das querträgerseitige Ende der Crashbox ist entweder am Mittelsteg des Querträgers oder an den Enden der seitlichen Schenkel festgelegt.

Dabei ist aus dem Stand der Technik bekannt, daß ein Querträger im Verhältnis zur Straße höher oder tiefer als ein Längsträger sitzen kann. So zeigt die DE 198 20 433 eine Tragstruktur mit einem Deformationselement mit schräger Krafteinleitung. Die US 6 364 384 B1 und die JP 06 211 091 A weisen einen zur Mittellängsebene des Längsträgers versetzt angeordneten Querträger auf.

Aus der DE 100 57 311 A1 ist eine Anbindung einer Crashbox an einen Querträger bekannt, bei der die Crashbox sowohl mit ihrem querträgerseitigen Ende an den Mittelsteg als auch endseitig an die Schenkel gefügt ist. Dabei verläuft die Fügenaht am Mittelsteg weitestgehend parallel zum Querträger, die Fügenaht an den Schenkeln verläuft jedoch im wesentlichen quer dazu. Mit dieser Ausführung soll eine größere Sicherheit gegen Trennen der Fügeverbindung bei extremen Verformungen erreicht werden. Die in zumindest zwei Ebenen ausgerichtete Fügeverbindung gewährleistet eine hohe Steifigkeit und mechanische Stabilität.

Liegt der Querträger jedoch nicht in einer Ebene mit den Längsträgern, liegt er also im Verhältnis zur Straße höher oder tiefer als die Längsträger, würde bei der oben beschriebenen Crashboxanbindung die Crashbox in einem relativ großen Winkel auf den jeweiligen Längsträger treffen. Mit diesem relativ großen Auftreffwinkel säße die Crashbox zwar mittig auf dem Längsträger, würde aber gleichzeitig die Kraft eines Stoßes äußerst ungünstig in den Längsträger einleiten. Zum einen wird ein Biegemoment in die Längsträger übertragen, das die Längsträger beschädigen kann, zum anderen hätte die Crashbox die Tendenz abzuknicken, wodurch die mögliche maximale Energieaufnahme deutlich verringert wird.

Der Erfindung liegt daher die Aufgabe zugrunde, ein Stossfängersystem aufzuzeigen, dass auch bei einem zwischen dem Querträger und den Längsträgern bestehenden Höhenunterschied optimiert ist.

Die Erfindung löst diese Aufgabe mit den Merkmalen des Anspruchs 1.

Demnach wird ein Querträger, der im Verhältnis zur Straße höher oder tiefer als die Längsträger sitzt, erfindungsgemäß so angebunden, dass die Crashbox an ihrem einen Ende mittig auf dem jeweiligen Längsträger und auf ihrer anderen Seite sowohl am Mittelsteg als auch einseitig am Flansch oder am Schenkel des Querträgers angebunden ist. Dadurch fällt der Auftreffwinkel auf den Längsträger kleiner aus und die Crashbox ist einseitig steifer angebunden. Diese erfindungsgemäße Anbindung der Crashbox führt dazu, dass die aus einem Anprall resultierende Kraft auf den Querträger in Richtung Längsträger-Mitte verlegt wird, so dass ein möglichst geringes Biegemoment in den Längsträger eingeleitet wird. Gleichzeitig neigt die Crashbox weniger zum Abknicken.

Dieser Effekt kann vorteilhaft durch die Maßnahmen in den Unteransprüchen verstärkt werden. Am einfachsten läßt sich eine Crashbox aus zwei zusammengesetzten Halbschalen zusätzlich einseitig versteifen, indem die mit dem Flansch verbundene Schale stärker ausgelegt wird als die andere Halbschale. Zum Beispiel kann die mit dem Flansch verbundene Halbschale eine höhere Wanddicke oder eine höhere Festigkeit des Werkstoffs aufweisen als die andere Halbschale. Die Crashbox muß jedoch nicht in Halbschalenbauweise ausgeführt sein. Sie kann auch einteilig gebaut werden, wobei sie dann partiell verstärkt werden kann, zum Beispiel durch ein Zusatzblech oder eine partielle Wärmebehandlung.

Nachfolgend ist die Erfindung anhand der Figuren näher beschrieben. Dabei zeigen
Figur 1 ein erfindungsgemäßes Stoßfängersystem 1 im Zusammenbau,
Figur 2 die erfindungsgemäße Anbindung einer Crashbox 3 an einen Längsträger 4 und einen Querträger 2 und

Die Figuren 3a bis 3c die Crashbox 3 als Einzeldarstellung aus verschiedenen Perspektiven.

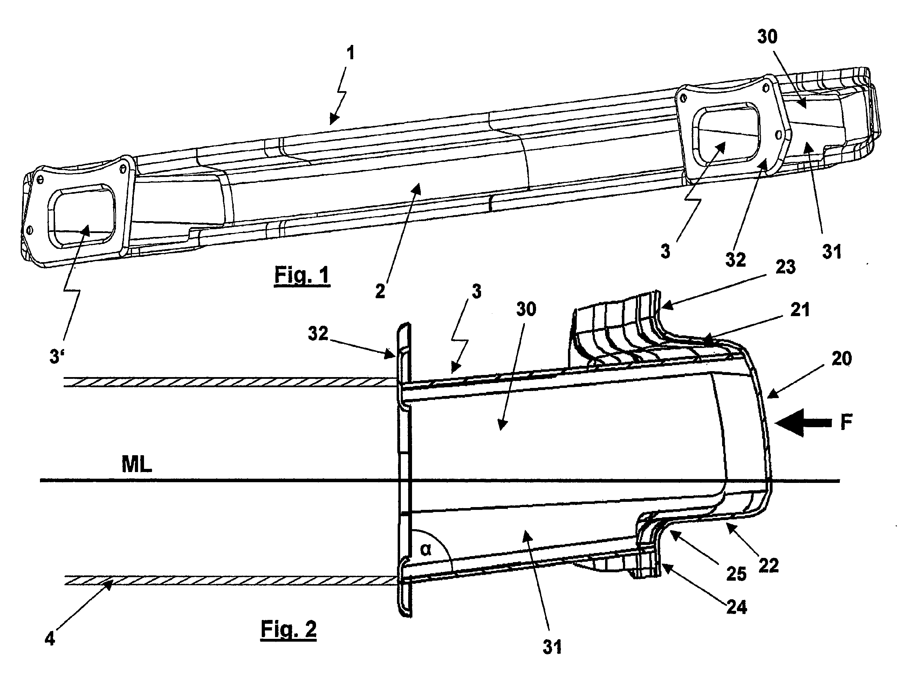

Figur 1 zeigt ein erfindungsgemäßes Stoßfängersystem 1 mit einem Querträger 2, der ein offenes hutförmiges Profil aufweist. Die offene Seite des Hutprofils 2 zeigt zu den Crashboxen 3 und 3', die geschlossene Seite des Hutprofils 2 zeigt in Fahrtrichtung vom Fahrzeug weg. An das Hutprofil 2 sind zwei Crashboxen 3 und 3' angebunden. Die Crashboxen 3 und 3' bestehen aus zwei Halbschalen 30 und 31 und sind mit einer rückwärtigen Flanschplatte 32 an einem Fahrzeuglängsträger festlegbar. Die Crashboxen 3 und 3' sind innen im offenen Hutprofil 2 angebunden. Die erfindungsgemäße Anbindung ist in der Figur 2 im Detail dargestellt.

Figur 2 zeigt einen Schnitt durch die Crashbox 3 im Anbindungsbereich an einen Längsträger 4 und den Querträger 2. Die Crashbox 3 ist mit ihrer rückwärtigen Flanschplatte 32 mittig auf dem Längsträger 4 angesetzt. Durch das mittige Ansetzen auf dem Längsträger 4 soll ein möglichst geringes Biegemoment in den Längsträger 4 eingeleitet werden. Es ist daher im Stand der Technik üblich, eine Crashbox so weit wie möglich mittig auf dem Längsträger 4 anzusetzen. Dies entspricht auch der erfindungsgemäßen Ausführung, allerdings ist die Crashbox 3 im Verhältnis zur Ebene Mitte Längsträger ML geneigt ausgeführt, weil der Querträger 2 aus Design- und Konstruktionsgründen nicht in der Ebene ML verlaufen darf. Dadurch könnte wiederum ein unzulässiges Biegemoment in den Längsträger 4 eingebracht werden. Um diesen Effekt zu vermeiden, ist die Crashbox 3 einseitig versteift ausgeführt. Dazu wird in diesem Fall die untere Halbschale 31 direkt mit dem Flansch 24 und / oder dem Schenkel 22 des Querträgers 2 verbunden. Idealerweise befindet sich die Fügestelle in der Biegung 25 zwischen dem Flansch 24 und dem Schenkel 22. Durch die erfindungsgemäße Anbindung ist der Auftreffwinkel a der unteren Halbschale 31 auf den Längsträger 4 weniger spitz als bei herkömmlicher Anbindung der Halbschale 31 an den Mittelsteg 20 des Querträgers 2. Das gesamte Stoßfängersystem 1 kann auch um 180° gedreht angebracht werden, so dass die Crashbox 3 sich nach unten aus der Mittellängsebene ML des Längsträgers 4 wegneigt und der Querträger 2 im Verhältnis zur Mittellängsebene ML nach unten versetzt angeordnet ist. Dann ist die obere Halbschale 30 verkürzt ausgeführt und entsprechend mit dem Schenkel 21 und/ oder dem Flansch 23 des Querträgers 2 verbunden.

Die Kraft F die bei einem Anprall auf den Querträger 2 in die Crashbox 3 eingeleitet wird, verlagert sich durch die einseitig steifere Ausführung der Crashbox 3 wiederum in Richtung der Ebene Mitte Längsträger ML. Dadurch wird ein Biegemoment weitestgehend vermieden. Gleichzeitig kann der Querträger 2 jedoch seitlich versetzt zur Ebene ML angeordnet werden.

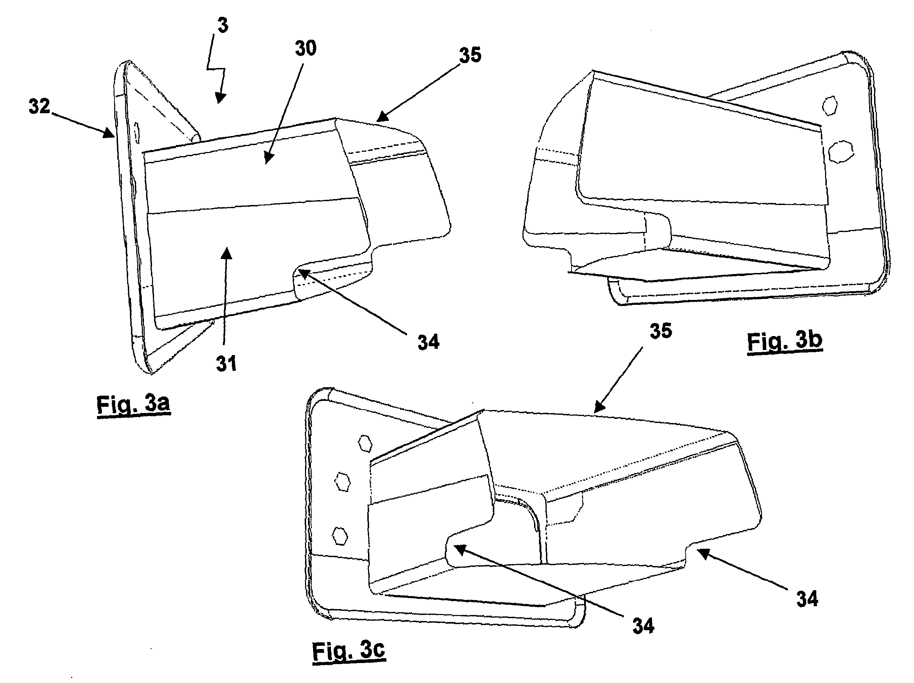

Die Figuren 3a bis 3c zeigen die erfindungsgemäße Crashbox 3 aus mehreren Perspektiven. Eine der beiden Halbschalen 30, 31 zeigt eine Ausnehmung 34, wobei in etwa die Schenkellänge eines Querträgerschenkels 21, 22 aus der Crashboxhalbschale 31 ausgeschnitten wurde. Im Bereich der Ausnehmung 34 wird die Crashbox mit dem Flansch 23, 24 und/ oder dem Schenkel 21, 22 des Querträgers 2 verbunden. An der offenen Stirnseite 35 kann die Crashbox 3 innen an den Mittelsteg 20 des Querträgers 2 gefügt werden. Vorteilhaft ist die Halbschale 31 verstärkt ausgeführt. Sie besitzt eine größere Wandstärke und/ oder Festigkeit als die Halbschale 30. Diese Wandstärke erreicht die Halbschale 31 durch eine größere Blechdicke und/ oder eine höhere Materialfestigkeit.

Es kommt jedoch nicht darauf an, dass die Crashbox 3, 3' aus Halbschalen 30 und 31 besteht, sie kann ebenso einteilig hergestellt sein. Zudem kann sie beispielsweise Sicken zur gezielten Faltenbildung aufweisen. Entscheidend ist die versetzte Anbindung an den Querträger 2 und damit die einseitig steifere Ausführung der Crashbox 3, 3'. Der Querträger 2 wiederum kann auch mit einem Schließblech geschlossen sein.

## Patentansprüche

1. Stoßfängersystem (1) für ein Fahrzeug, bestehend aus einem Querträge (2) mit einem hutförmigen Profil mit einem Mittelsteg (20), zwei davon abgehenden Schenkeln (21, 22) mit je einem Flansch (23, 24) und zwei zwischen Querträger (2) und den Längsträgern (4) des Fahrzeugs festgelegten Crashboxen (3 und 3),
**dadurch gekennzeichnet,**
**dass** der Querträger (2) im Verhältnis zur Straße höher oder tiefer als die Längsträger (4) sitzt und die Crashbox (3, 3') mittig auf dem jeweiligen Längsträger (4) und sowohl am Mittelsteg (20) als auch einseitig am Flansch (23, 24) und/ oder am Schenkel (21, 22) des Querträgers (2) angebunden ist.

2. Stoßfängersystem 1 nach Anspruch 1,
**dadurch gekennzeichnet,**
**dass** die Crashbox (3, 3') aus zwei Halbschalen (30, 31) besteht, wobei die mit dem Flansch (24) und/ oder Schenkel (22) des Querträgers (2) verbundene Halbschalen (31) stärker ausgelegt ist als die andere Halbschale (30).

3. Stoßfängersystem 1 nach Anspruch 2,
**dadurch gekennzeichnet,**
**dass** die mit dem Flansch (24) und/ oder Schenkel (22) verbundene Halbschale (31) eine höhere Wanddicke oder eine höhere Festigkeit aufweist als die andere Halbschale (30).

4. Stoßfängersystem 1 nach einem der vorangehenden Ansprüche,
**dadurch gekennzeichnet,**
**dass** das Profil des Querträgers (2) ganz oder teilweise geschlossen ist.

## Claims

1. Bumper system (1) for a vehicle consisting of a cross member (2) with a hat-shaped profile with a middle bar (20), two legs (21, 22) protruding therefrom, each with a flange (23, 24), and two crash boxes (3, 3') fixed between cross member (2) and the longitudinal chassis beams (4) of the vehicle,
**characterized in**
**that** the cross member (2) is situated higher or lower in relation to the road than the longitudinal chassis beams (4), and the crash box (3, 3') is centrally connected to the respective longitudinal chassis beam (4) and connected to the middle bar (20) as well as connected to one side of the flange (23, 24) and/or of the leg (21, 22) of the cross member (2).

2. Bumper system (1) according to claim 1,
**characterized in**
**that** the crash box (3, 3') consists of two half shells (30, 31) wherein the half shell (31), connected to the flange (24) and/or leg (22) of the cross member (2), is designed more sturdily than the other half shell (30).

3. Bumper system (1) according to claim 2,
**characterized in**
**that** the wall thickness or strength of the half shell (31), connected to the flange (24) and/or leg (22), is greater than those of the other half shell (30).

4. Bumper system (1) according to one of the preceding claims,
**characterized in**
**that** the profile of the cross member (2) is closed completely or partially.

## Revendications

1. Système de pare-chocs (1) pour un véhicule, constitué d'une traverse (2) avec un profil en forme de chapeau comprenant une bande médiane (20), deux branches (21, 22) partant de celle-ci ayant chacune une bride (23, 24) et deux boîtiers amortisseurs (3, 3') fixés entre la traverse (2) et les supports longitudinaux (4) du véhicule,
**caractérisé en ce que**
la traverse (2) est située par rapport à la chaussée plus haut ou plus profondément que les supports longitudinaux (4) et le boîtier amortisseur (3, 3') est raccordé centralement au support longitudinal respectif (4) et à la fois à la bande médiane (20) ainsi que d'un côté à la bride (23, 24) et/ou à la branche (21, 22) de la traverse (2).

2. Système de pare-chocs (1) selon la revendication 1,
**caractérisé en ce que**
le boîtier amortisseur (3, 3') se compose de deux demi-coques (30, 31), la demi-coque (31) connectée à la bride (24) et/ou à la branche (22) de la traverse (2) étant réalisée de manière plus solide que l'autre demi-coque (30).

3. Système de pare-chocs (1) selon la revendication 2,
**caractérisé en ce que**
la demi-coque (31) connectée à la bride (24) et/ou à la branche (22) présente une plus grande épaisseur de paroi ou une plus grande solidité que l'autre demi-coque (30).

4. Système de pare-chocs (1) selon l'une quelconque des revendications précédentes,
**caractérisé en ce que**
le profil de la traverse (2) est complètement ou partiellement fermé.
